# EUROPÄISCHE PATENTANMELDUNG

(11) **EP 1 048 357 A2**
(43) Veröffentlichungstag der Anmeldung: **02.11.2000**
(21) Anmeldenummer: 99124689.3
(22) Anmeldetag: 11.12.1999
(51) Int. Cl.: B03B 9/06, C05F 9/00, C05F 9/02, C05F 17/00, C05F 17/02

(54) **Verfahren und Vorrichtung zur Entsorgung von verrottbaren Abfällen**

(30) Priorität: 26.04.1999 DE 19921405
(71) Anmelder: Kneussle, Winfried, 88348 Saulgau (DE)
(72) Erfinder: Kneussle, Winfried, 88348 Saulgau (DE)

(57) **Zusammenfassung**

Es werden ein Verfahren und eine Vorrichtung zur Entsorgung von verrottbarem Abfall, beispielsweise Bio-Müll, vorgeschlagen, die sich dadurch auszeichnen, daß der Abfall vor Zuleitung in die Abwässer oder in die allgemeine Entsorgung, beispielsweise zu Müll-Deponien oder Verrottungsanlagen, von Fetten, Fettanteilen und Ölen befreit werden. Die vorgeschlagenen Verfahren. und Vorrichtungen eigneten sich zur Entsorgung von Bio-Müll in Privathaushalten sowie in Dienstleistungs- und Wirtschaftsbetrieben.

## Beschreibung

Die Erfindung betrifft ein Verfahren und eine Vorrichtung zum Entsorgen von verrottbaren Abfällen (Bio-Müll) nach dem Oberbegriff des Patentanspruchs 1 bzw. nach dem Oberbegriff von Patentanspruch 4.

Die DE 44 16 082 A1 offenbart ein gattungsgemäßes Verfahren und eine entsprechende Vorrichtung zur Entsorgung von sogenanntem Bio-Müll aus Privathaushalten sowie aus Dienstleistungs- und Wirtschaftsbetrieben. Der zu entsorgende Bio-Müll wird in verrottbaren Karton-Behältnissen gesammelt, zentral an einer Sammelstelle deponiert und von dort auf eine spezielle Müll-Deoponie gebracht. Auf dieser Müll-Deponie verrottet in mehr oder weniger langen Zeiträumen der Abfall zusammen mit den Karton-Behältnissen. Neben dem umständlichen, zeitraubenden und auch hygienisch nicht einwandfreien Verfahren des Sammelns von Müll berücksichtigt dieses bekannte Verfahren außerdem nicht, daß auch im Bio-Müll Fette vorhanden sind, die beim Verrottungsvorgang in das Erdreich eindringen und eine Umweltbelastung des Bodens und vor allem des Grundwassers darstellen.

Die DE 42 34 062 A1 beschreibt eine Vorrichtung zum Desinfizieren und/oder Sterilisieren von infektiösem Müll. Dieser Müll wird in einen verschließbaren Raum verbracht, in dem ein Dampferzeuger, ein Stromgenerator und eine Dampf- oder Luftabsaugung vorgesehen sind. Der Dampf- oder Luftabsaugung ist ein Filter zugeordnet. Ferner sind eine Kondensatabsaugeinrichtung und eine Transportvorrichtung für die Behälter eingerichtet, die den Spezialmüll aufnehmen.

Ausgehend von dem vorgenannten Stand der Technik ist es Aufgabe der Erfindung, ein Verfahren und eine Vorrichtung zur Entsorgung von verrottbarem Müll, sogenannter Bio-Müll, zu schaffen, die auf einem einfachen Grundsystem aufgebaut sind und eine Umweltbelastung durch Fette vermeiden oder zumindest wesentlich verringern.

Erfindungsgemäß werden diese Aufgaben durch die Merkmale des Patentanspruchs 1 bezüglich des Verfahrens und durch die Merkmale von Patentanspruch 4 hinsichtlich der Vorrichtung gelöst.

Vorteilhafte Weiterbildungen und Ausgestaltungen sind in den jeweiligen zugeordneten Unteransprüchen beschrieben.

Ein besonderes Problem bei der Abwasserreinigung und der Klärung von Abwässern sind die in den Abwässern vorhandenen Fette und Fettanteile, die nur schwer und oftmals nur mit chemischen Mitteln zu entfernen sind.. Solche Fette und Fettanteile sind außerdem ein besonders kritisches Problem für die abwasserführenden Einrichtungen, wie Kanalrohre, Rinnen, Becken und dergleichen sowie von Kläranlagen, weil die Fette und Fettanteile bzw. die Öle in Abwässern diese Einrichtungen angreifen und dadurch Zerstörungen an diesen Einrichtungen hervorrufen. Die Reinigung der Einrichtungen ist schwierig und oft nur durch Einsatz chemischer Mittel erfolgreich.

Die Erfindung geht nun von dem Grundgedanken aus, Fette und Fettanteile gar nicht erst in Abwässer gelangen zu lassen. Dies geschieht auf sehr einfache Weise dadurch, daß die Fette und Fettanteile aus dem Bio-Müll herausgelöst werden, bevor der verrottbare Müll dem Abwasser oder der Verrottung zugeführt wird. Die Trennung der Fette von dem Müll erfolgt denkbar einfach durch Zerkleinerung des Bio-Mülls unter Zugabe von Wasser. Der zerkleinerte Bio-Müll wird in Verbindung mit Wasser zu einem Brei oder breiigen Gemisch verarbeitet, der direkt dem Abwasser zugegeben werden kann. Die Fette und Fettanteile und Öle werden getrennt abgeschieden und einer speziellen Entsorgung zugeführt.

Wasser gilt bekanntlich chemisch als geruchs- und geschmacklose Flüssigkeit mit einer Dichte von 1,0 g/cm³ bei einer Raumtemperatur von 4° C. Öle und geschmolzene Fette dagegen sind bei Zimmertemperatur flüssige und in Wasser unlösliche Verbindungen. Die bei Zimmertemperatur flüssigen Fette werden Öle genannt, während die bei Zimmertemperatur festen Fette die sogenannten Fette i.e.S. heißen. Alle Fettstoffe sind in Wasser unlöslich und werden von Wasser nicht benetzt. Dies hat zur Folge, daß Öle und Fette keine Verbindung mit Wasser eingehen und bei Zugabe von Wasser getrennte Räume einnehmen. Da Öle und Fette außerdem eine geringere Dichte als Wasser besitzen, schwimmen sie in exakter Trennung auf der Wasseroberfläche und können demzufolge einfach abgesaugt oder abgeschöpft oder abgeschieden werden. Da der aus dem Bio-Müll unter Zugabe von Flüssigkeit, in vorteilhafter und einfachster Weise von Wasser entstandene Bio-Brei ebenfalls schwerer als Öl und Fett ist, erfolgt hier die exakte Trennung der Stoffe, so daß Fette, Fettanteile und Öle einfach aus dem Bio-Müll lösbar sind.

Die Einrichtung zur Trennung der Fette, Fettanteile und Öle aus dem Bio-Müll erfolgt in einer einfachen und in jeden Haushalt aufstellbaren und einfach zu bedienenden Vorrichtung.

In der Zeichnung ist ein Beispiel der Erfindung dargestellt. Darin zeigen:
- Figur 1: eine Vorrichtung für die Entsorgung von verrottbarem Müll in vereinfachter Darstellung, und
- Figur 2: eine Vorrichtung anderer Bauart in wiederum vereinfachter Darstellung.

Bei dem erfindungsgemäßen Verfahren zur Entsorgung von verrottbarem Müll, dem sogenannten Bio-Müll, wird der Abfall in einen Behälter gegeben, der bei ausreichender Menge und unter Zugabe von Wasser zerkleinert und zu einem Brei oder breiigen Gemisch verarbeitet wird. Dabei lösen sich Fette, Fettanteile und Öle aus dem Brei bzw. dem Bio-Müll heraus, die aufgrund der geringen spezifischen Dichte oberhalb des Breis schwimmen. Die Fette oder Öle werden aus dem Behälter abgesaugt, abgeschöpft oder abgeschieden und in ein separates Behältnis für die Spezialentsorgung gegeben. Der mit Wasser vermischte Bio-Brei wird anschließend abgelassen und dem normalen Abwasser zugeleitet. Statt der Zuleitung zum Abwasser kann auch eine Entnahme der Feststoffe vorgesehen werden, die dann der normalen und umweltfreundlichen Verrottung zugeführt werden. Ferner liegt es im Bereich der Erfindung, vor der Zuleitung zum Abwasser eine Zwischenlagerung des Bio-Breis in einem Zwischenbehälter vorzunehmen. Dabei kann die Flüssigkeit aus dem Zwischenbehälter entnommen werden oder kontinuierlich ablaufen, während die Feststoffe getrennt abgenommen werden.

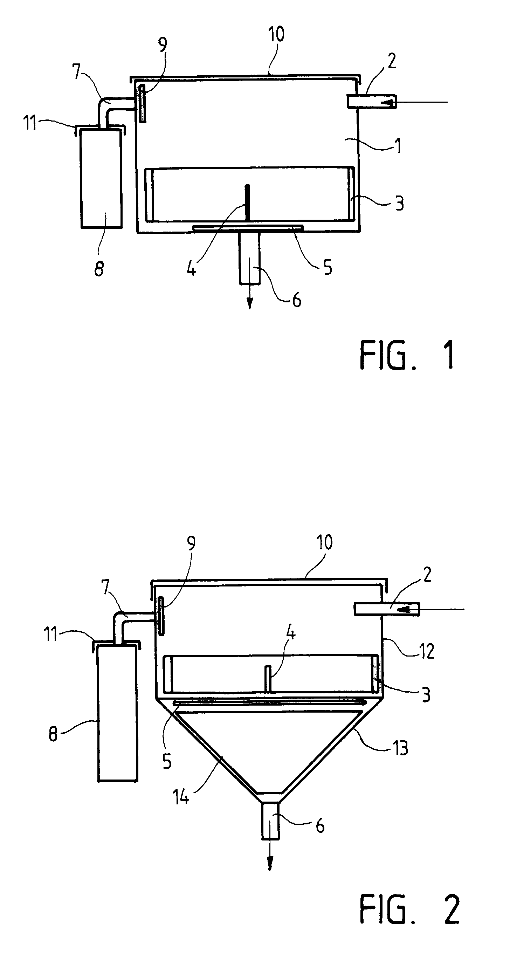

In Figur 1 ist ein Behälter 1 für Haushalte oder Betriebe schematisch dargestellt. Der Behälter 1 für den Privathaushalt unterscheidet sich von dem Behälter für Dienstleistungs- oder Wirtschaftsbetriebe im wesentlichen nur durch die Größe und das damit verbundene Fassungsvermögen. Im oberen Bereich des Behälters 1 ist ein Wasserzulauf 2 angebracht, der beispielsweise über eine Schlauchverbindung mit der Wasserzulaufleitung verbunden ist und durch ein Regelventil oder Hahn bei Bedarf geschlossen oder geöffnet werden kann.

Im Bodenbereich des Behälters 1 ist eine Zerkleinerungseinrichtung in Form von rotierenden Messern 3 vorgesehen. Die Messer 3 sind auf einer zentralen Welle 4 gelagert und werden von einem (nicht gezeigten) Elektromotor bei Bedarf angetrieben. Unterhalb der Messer 3 oder sonstigen an sich bekannten Schneideinrichtung befindet sich ein Sieb 5. Unter dem Sieb 5 ist der Abfluß 6 für das Ablassen des Breis bzw. der breiigen Bio-Masse vorgesehen. Der Abfluß 6 ist mit dem normalen Abfluß der Entsorgungskanäle verbunden, wobei die Verbindung wiederum beispielhaft durch einen Schlauch oder ein beliebiges Rohr erfolgen kann. Der Abfluß ist in vorteilhafter Ausgestaltung durch eine Schließvorrichtung verschließbar.

Durch das dem Abfluß 6 vorgeschaltete Sieb 5 soll verhindert werden, daß zu große bzw. zu grobe Stücke des Bio.Mülls dem Abwasser zugeführt werden, was gegebenenfalls zu Verstopfungen von Leitungen führen kann.

Ebenfalls im oberen Bereich des Behälters 1 befindet sich eine Absaugeinrichtung oder Fett-Abscheideeinrichtung in Form eines Saugrohres 7 und eines mit dem Saugrohr 7 verbundenen Öl- oder Fettbehälters 8. Damit im wesentlichen nur Fette oder Öle und nicht Feststoffanteile des Mülls abgesaugt werden, ist dem Absaugrohr 7 noch ein Filter 9 vorgeschaltet. Der Behälter 1 und der Fettbehälter 8 sind durch Deckel 10 bzw. 11 verschließbar. Das Absaugen der Fette oder Öle aus dem Behälter 1 kann elektromotorisch durch eine (nicht gezeigte) Pumpe geschehen. An dieser Stelle sind auch andere Einrichtungen möglich, beispielsweise auch das manuelle Abschöpfen der Fett- bzw. Ölschicht oder das an sich bekannte Abscheiden eines Stoffes von einem anderen Stoff.

Die Vorrichtung nach Figur 2 unterscheidet sich von der Vorrichtung nach Figur 1 durch die andere Ausgestaltung des Behälters 12. In dieser Figur 2 sind deshalb die beibehaltenen Einrichtungen mit gleichen Bezugszeichen versehen wie in Figur 1. Auch die Bedeutung der beibehaltenen Einrichtung entspricht der von Figur 1.

Der Behälter 12 nach Figur 2 besitzt einen oberen zylindrischen Teil, der den Wasserzulauf 2 und das Absaugrohr 7 aufweist. In diesem zylindrischen Teil des Behälters 12 befindet sich auch wieder die elektromotorisch angetriebene Schneideinrichtung 3. Der Bodenbereich des Behälters ist nun jedoch durch einen konischen Teil 13 gebildet, an dessen tiefster Stelle der Abfluß 6 eingerichtet ist. Zwischen der Schneideinrichtung (Messer 3) und dem konischen Teil 13 befindet sich wiederum ein Sieb 5. In dem konischen Teil 13 ist ein ebenfalls konisch geformtes Rotationsteil 14 eingesetzt, das durch einen (nicht gezeigten) Elektromotor in Drehung gesetzt werden kann. Das konische Rotationsteil 14 ist oben und unten für den Zulauf und den Ablauf des Bio-Breis geöffnet. Durch die Rotation wird der wässrige Brei infolge der Zentrifugalkraft radial nach außen an die Wandung des Rotationsteils 14 gedrückt. Das Wasser fließt ab und der Brei kann getrennt abgenommen werden, bevor er teilweise oder ganz in das Abwasser geleitet wird. Das Rotationsteil 14 bildet insofern eine zweite Trennvorrichtung des Bio-Mülls. Die erste Trennvorrichtung ist auch hier das Trennen und Aufnehmen der Fette und Öle in dem Fettbehälter 8.

Anstelle des im Bodenteil des Behälters 12 eingesetzten Rotationsteils 14 kann das Rotationsteil auch das an den zylindrischen Teil entsprechend angesetzte drehbare Bodenteil sein. In diesem Falle müßte zwischen dem stationären oberen Teil und dem drehbaren unteren Teil eine Dichtungsvorrichtung angebracht werden.

Zwischen dem Bodenteil des Behälters 1, 12 und dem Abfluß 6 kann noch ein Zwischenbehälter eingesetzt sein. Dadurch wird der von Fetten und Ölen weitestgehend befreite Bio-Müll nicht immer unmittelbar dem Abwasser oder der Verrottung zugeführt, sondern erst nach frei bestimmbaren Zeiten oder bei erreichter Menge.

Alle in den Figuren dargestellten und in der Beschreibung beschriebenen Einzelheiten sind für die Erfindung wichtig. Dies gilt ebenso für die Zusammenfassung, die zu Auslegung des Schutzbereiches herangezogen werden darf.

## Patentansprüche

1. Verfahren zur Entsorgung von verrotbarrem Abfall,
**dadurch gekennzeichnet,**
daß der Abfall in einen Behälter (1;12) gegeben und unter Zugabe einer Flüssigkeit, insbesondere Wasser, zu einer breiigen Masse verarbeitet wird,
daß die Fette, Fettanteile oder Öle aus der breiigen Masse ausgeschieden und einer getrennten Entsorgung zugeführt werden, und
daß die von Fett, Fettanteilen oder Ölen im wesentlichen befreite breiige Masse dem Abwasser und/oder der gereinigten Bio-Müll-Entsorgung bzw. -Verrottung direkt oder indirekt zugeleitet werden.

2. Verfahren nach Anspruch 1,
**dadurch gekennzeichnet,**
daß der Abfall unter Zugabe von Wasser in dem Behälter (1;12) durch eine Schneideinrichtung zu einer breiigen Masse verarbeitet wird, die durch ein vorgeschaltetes Sieb (5) dem Abwasser und/oder der Entsorgung zugeführt wird, während Fett, Fettanteile oder Öle oberhalb der breiigen Masse durch einen Fettabscheider mit wahlweiser Zuordnung eines Filters (9) abgeschieden werden.

3. Verfahren nach Anspruch 1 oder 2,
**dadurch gekennzeichnet,**
daß die breiige Masse vor dem Zulauf zum Abwasser in Rotation versetzt und in feste und flüssige Anteile getrennt wird.

4. Vorrichtung zur Durchführung des Verfahrens zur Entsorgung von verrottbarem Abfall )Bio-Müll),
**dadurch gekennzeichnet,**
daß ein Behälter (1;12) zur Aufnahme von verrottbarem Abfall vorgesehen ist, in dessen Kopfbereich ein Zulauf (2) für eine Flüssigkeit, insbesondere Wasser, und eine Absaug- oder Abscheideeinrichtung (7,8) für Fette, Fettanteile und Öle eingerichtet ist, während im Bodenbereich des Behälters (1;12) eine Zerkleinerungseinrichtung angeordnet ist, unterhalb der ein Abfluß (6) angebracht ist.

5. Vorrichtung nach Anspruch 4,
**dadurch gekennzeichnet,**
daß der Wasserzulauf (2) und/oder der Abfluß (6) eine Schließeinrichtung aufweisen.

6. Vorrichtung nach Anspruch 4,
**dadurch gekennzeichnet,**
daß vor dem Abfluß (6) ein Sieb (5) angeordnet ist.

7. Vorrichtung nach Anspruch 4,
**dadurch gekennzeichnet,**
daß die Zerkleinerungseinrichtung eine elektromotorische angetriebene Schneideeinrichtung (3) mit drehenden Mesern ist.

8. Vorrichtung nach Anspruch 4,
**dadurch gekennzeichnet,**
daß der Bodenbereich des Behälters (12) ein elektromotorisch angetriebenes konisches Rotationsteil (14) aufweist.

9. Vorrichtung nach einem der Ansprüche 4 bis 8,
**dadurch gekennzeichnet,**
daß zwischen dem Behälter (1;12) und dem Abfluß (6) eine Zwischenbehälter vorgesehen ist, aus dem wahlweise die Flüssigkeit des eingebrachten Bio-Breis abnehmebar ist.
